# EUROPÄISCHE PATENTSCHRIFT

(11) **EP 1 444 490 B1**
(45) Veröffentlichungstag und Bekanntmachung des Hinweises auf die Patenterteilung: **08.08.2007**
(21) Anmeldenummer: 02787549.1
(22) Anmeldetag: 04.11.2002
(51) Int. Cl.: G01G 13/02

(54) **VERFAHREN UND VORRICHTUNG ZUM GRAVIMETRISCHEN DOSIEREN VON SCHÜTTGUT**
METHOD AND DEVICE FOR GRAVIMETRIC DOSING BULK MATERIAL
PROCEDE ET DISPOSITIF DE DOSAGE GRAVIMETRIQUE DE MATIERES EN VRAC

(30) Priorität: 03.11.2001 DE 10153425
(43) Veröffentlichungstag der Anmeldung: 11.08.2004
(73) Patentinhaber: Pfister GmbH, 86165 Augsburg (DE)
(72) Erfinder: WOLFSCHAFFNER, Hubert, 86453 Dasing (DE)
(74) Vertreter: Fiener, Josef
(86) Internationale Anmeldenummer: PCT/EP2002/012261
(87) Internationale Veröffentlichungsnummer: WO 2003/040666

(56) Entgegenhaltungen:
- EP-B- 0 644 406
- DE-A- 3 310 735
- DE-A- 3 413 757
- FR-A- 2 631 443

## Beschreibung

Die Erfindung betrifft ein Verfahren und eine Vorrichtung zum gravimetrischen Dosieren von Schüttgut mit den oberbegrifflichen Merkmalen des Patentanspruches 1 bzw. 4.

Ein derartiges Verfahren und eine Vorrichtung zum Beschicken eines Behälters mit pulvrigen Gütern ist aus der DE 34 13 757 A1 bekannt. Hierbei mündet in einem Vorbehälter wenigstens ein Zuführungsrohr, durch das pulverförmiges Schüttgut aus einem oder mehreren Vorratsbehältern nacheinander gesaugt wird, dort additiv verwogen und nach öffnen eines Bodenverschlusses einer Mischeinrichtung zugeführt wird. Derartige Gemengeanlagen zum Dosieren von Chargen pulvriger Güter werden beispielsweise in der keramischen Industrie verwendet, wobei mehrere Sorten unterschiedlicher Bindemittel, Füllstoffe, Farben, Zuschläge verwogen werden. Die Schüttgüter werden über Förderschnecken oder einen pneumatischen Förderstrom dem gemeinsamen Wägebehälter zugeführt. Bei derartigen Wägevorrichtungen, die in einem pneumatischen Förderstrom liegen, ist die Wiegegenauigkeit jedoch wesentlich von den Druckverhältnissen abhängig. So soll für eine ausreichende Wägegenauigkeit vermieden werden, daß im Förderstrom auftretende Druckstöße, z. B. aufgrund der Ventilbetätigungen sich auf die Waage auswirken. Häufig werden hierzu die ein- und ausmündenden Leitungen zum Beschicken und Austragen im Anschlußbereich horizontal verlaufend geführt, damit Druckänderungen keinen Einfluß auf die Wägezellen des Vorbehälters ausüben. Diese Maßnahmen reichen jedoch nicht aus, um einen Einfluß der Druckverhältnisse auf das Wägesignal auszuschließen, so daß bereits bei geringen Druckunterschieden oder undefinierten Leckluftmengen die Wägeergebnisse verfälscht werden können.

Aus der DE 33 10 735 A1 ist desweiteren ein Justierverfahren für einen Wägebehälter bekannt, wobei die Wirkung von Kraftnebenschlüssen auf das Auswägeergebnis dadurch minimiert werden soll, daß aus der scheinbaren Belastungs- bzw. Gewichtsänderung des Wägebehälters in Abhängigkeit von der Temperatur oder dem Druck eine Korrekturgröße ermittelt wird, die dann dem Wägesignal durch Addition oder Subtraktion überlagert wird. Da hierbei direkt in das Wägesignal eingegriffen wird, ist die Eichfähigkeit einer derartigen Gemengeanlage nicht gegeben.

Aus der EP-B-0 644 406 der Anmelderin ist zudem die Anordnung eines Drucksensors zur Messung des Druckes im Wägebehälter bekannt, wobei die jeweils herrschenden Druckverhältnisse in dem Wägebehälter erfaßt werden können. Dabei wird erst bei Erreichen oder Unterschreiten eines bestimmten Grenzdruckwertes das Wägesignal der Wägezellen von der Wägeelektronik zur Registrierung übernommen. Hierdurch wird vermieden, daß eine Wägung bei zu hohem Unter- oder Überdruck erfolgt, die die Wägeergebnisse der geeichten Wägezelle und Wägeelektronik verfälschen könnten. Die Registrierung des Wägeergebnisses und Weiterschaltung des nächsten Dosierschrittes erfolgt solange nicht, bis der Druck im Wägebehälter mit dem Umgebungsdruck im wesentlichen übereinstimmt. Dieses System ist jedoch für die pneumatische Austragung, insbesondere bei geringen Förderströmen mit entsprechend geringen Luftmengen kaum geeignet.

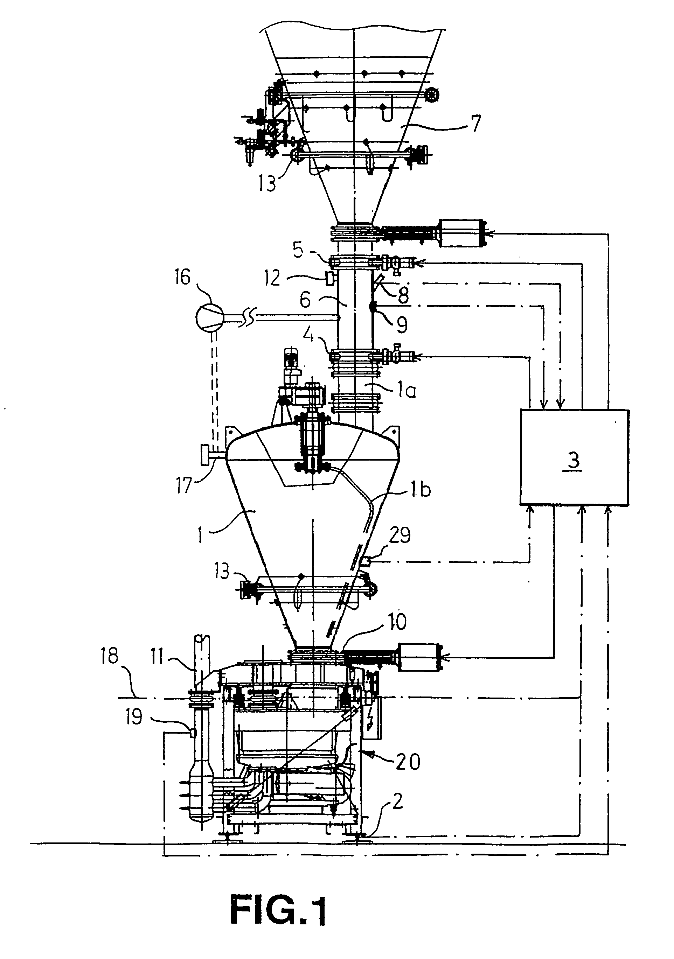

Aus der FR-A-26 31 443 ist zudem ein Verfahren zum gravimetrischen Dosieren von Schüttgut bekannt, bei dem das Schüttgut vor der Wägung im Vorbehälter in einem Zwischenbehälter zwischengespeichert wird und erst bei Erreichen eines Abgleichdruckwertes weitergegeben wird.(siehe Seite 1, Zeilen 9-25, Seite 2, Zeilen 13-36, Abb. 1).

Demzufolge liegt der Erfindung die Aufgabe zugrunde, ein Verfahren zum gravimetrischen Dosieren von Schüttgut und eine dementsprechende Vorrichtung anzugeben, wobei eine höhere Wägegenauigkeit, insbesondere bei geringen Förderströmen erreicht wird.

Diese Aufgabe wird gelöst durch ein Verfahren mit den Merkmalen des Anspruches 1 bzw. durch eine Vorrichtung mit den Merkmalen des Anspruches 4.

In erfindungsgemäßer Ausführung wird noch vor dem Wäge- bzw. Vorbehälter zur gravimetrischen Dosiervorrichtung ein Zwischenbehälter mit Klappenschleuse dazu verwendet, die Schüttgutzuführung und Beschickung des Vorbehälters gezielt zu steuern. Damit wird erreicht, daß keine Leckluft aus dem pneumatischen Fördersystem entweichen kann, insbesondere nicht beim Start des Dosiervorganges. Durch diese Kompensation der Krafteinflüsse der von der gravimetrischen Dosiervorrichtung zu-und abführenden Leitungen ergibt sich insgesamt eine genauere Dosierung.

Weitere vorteilhafte Ausgestaltungen sind Gegenstand der abhängigen Ansprüche.

Nachfolgend wird ein Ausführungsbeispiel anhand der Zeichnung näher erläutert und beschrieben. Hierbei zeigt die (einzige) Fig. 1 schematisch ein Ausführungsbeispiel einer Behälterwaage, wobei sich ein Vorbehälter 1 einer gravimetrischen Dosiervorrichtung 20 über wenigstens eine Wägezelle 2 abstützt, die hier unterhalb eines Gerüstes angeordnet ist. Der Ausgang der Wägezelle 2 ist mit einer Wägeelektronik 3 mit integrierter Dosiersteuerung verbunden (vgl. strichpunktierter Pfeil), die das Gewicht des Vorbehälters 1 und das über die Dosiervorrichtung 20 laufende Gewicht in einem Steuerungsrechner registriert, verarbeitet und anzeigt. Die Dosiersteuerung aktiviert auch eine untere Klappe 4 in einem Zuführrohr 1a, das in einen rohrförmigen Zwischenbehälter 6 übergeht, der mit einem darüber vorgesehenen Vorratsbehälter (Silo) 7 verbunden ist. Unterhalb des Vorratsbehälters 7 ist ein nicht näher bezeichneter Schieber und eine obere Klappe 5 angeordnet, die beide von der Wägeelektronik 3 bzw. Dosiersteuerung betätigbar sind. Der Zwischenbehälter 6 mit den wechselweise betätigbaren Klappen 4, 5 bildet somit eine sog. Klappenschleuse.

Unterhalb des Vorbehälters 1 ist eine Entleerungsklappe 10 oder ein Absperrschieber vorgesehen, die bzw. der ebenfalls von der Dosiersteuerung aktiviert wird und an eine gravimetrische Dosiervorrichtung 20, insbesondere eine Dosierrotorwaage, mit pneumatischer Austragung angeschlossen ist. Der Vorbehälter 1 der Dosierrotorwaage 20 wird somit durch eine Klappenschleuse befüllt, die aus den beiden Klappen 4 und 5 sowie dem Zwischenbehälter 6 gebildet ist und wie folgt arbeitet: Zunächst öffnet die obere Klappe 5 des Zwischenbehälters 6. Aus dem silo 7 fließt (bei geöffneten oberen Schieber) Schüttgut, z.B. Koksstaub in den Zwischenbehälter 6, der sich zwischen oberer Klappe 5 und unterer Klappe 4 befindet. Im Austausch dazu wird die verdrängte Luft in das Silo 7 geleitet. Die obere Bafüll-Klappe 5 schließt über Zeit oder durch das Signal einer Füllstandssonde 8 des Zwischenbehälters 6. Der Druck im mit Koks gefüllten Zwischenbehälter 6 wird von einem Drucksensor 9 erfaßt, und das Drucksignal zur Wägeelektronik 3 geleitet, damit der Druck über eine in die Wägeelektronik 3 integrierte Druckregeleinrichtung durch Zuführen von Druckluft über eine Pumpe 16 auf oder geringfügig über den von einem Drucksensor 29 gemessenen Druck des Vorbehälters 1 gebracht wird, der insbesondere durch die Leckluft von einer pneumatischen Förderleitung 11 beim Entleeren der Dosiervorrichtung 20 entsteht. Dann öffnet die untere Klappe 4 auf Befehl von der Wägeelektronik 3. Der Koksstaub wird somit über das Befüllrohr 1a in den darunter befindlichen Vorbehälter 1 entleert. Die untere Klappe 4 am Zwischenbehälter 6 schließt nach kurzer Zeit oder Leermeldung der Füllstandssonde 8 wieder. Der vom Vorbehälter 1 übertragene Luftdruck im Zwischenbehälter 6 wird dann ggf. durch öffnen eines Entlastungsventils 12 entspannt. Dieser Zyklus wiederholt sich in zeitlich unterschiedlichen Abständen, entsprechend dem Nachfließverhalten des Materials und der geforderten Dosierleistung der Dosierrotorwaage 20 und den Füllstandsvorgaben, ermittelt aus dem jeweiligen Gewicht des Vorbehälters 1.

Aus dem Vorbehälter 1 fließt der Koksstaub dann kontinuierlich in das Zellenrad der Dosierrotorwaage 20. Wie oben angedeutet, kann sich das Zellenrad bzw. Dosierrotor um die Achse 18 unter Abstützung oder Aufhängung an der Wägezelle 2 verschwenken und liefert damit ein Wägesignal. Der Vorbehälter 1 besitzt ebenso wie der Vorratsbehälter 7 optional eine Belüftungseinrichtung 13 zur Fluidisierung des Koksstaubes. Zur zusätzlichen Unterstützung des Materialflusses ist in den Vorbehälter 1 ein motorisch angetriebener, kontinuierlich arbeitender Rührarm 1b eingebaut. Der Füllstand im Vorbehälter 1 wird somit von der Messeinrichtung gravimetrisch erfasst und seine Befüllung durch Ansteuerung der Klappenschleuse 4, 5 entsprechend geregelt.

Wie oben angegeben, ist es wesentlich,an dem Zwischenbehälter 6 einen Drucksensor 9 anzuordnen, um den darin herrschenden Druck zu erfassen und mit dem über den Drucksensor 29 erfaßten Druck im Vorbehälter 1 abzugleichen. Der Drucksensor 9 ist ebenso wie der Drucksensor 29 an die Wägeelektronik 3 angeschlossen, in der ein bestimmter Grenzdruckwert festgelegt und je nach der geforderten Genauigkeit als Sollwert, bevorzugt einer DruckDifferenz von nahe Null, abgespeichert ist. Erst wenn der Drucksensor 9 des Zwischenbehälters 6 im Vergleich zum Druckwert des Drucksensors 29 am Vorbehälter 1 einen Druck erfaßt, der diesem Abgleich- oder Grenzdifferenzdruckwert, bevorzugt nahe Null entspricht, wird von der Wägeelektronik 3 das Signal zum Öffnen der unteren Klappe 4 abgegeben und so das Zudosieren einer weiteren Charge in den sich somit auf etwa gleichem Druckniveau befindlichen Vorbehälter 1 ausgelöst.

Darüber hinaus kann ein weiterer Drucksensor 19 die Druckverhältnisse an der pneumatischen Austragvorrichtung 11 erfassen, um die Drucksignale mit denen der Drucksensoren 9 und 19 in der Wägeelektronik 3 miteinander abzugleichen. Da bei der Beschickung mit pulvrigen Schüttgütern, auch bei geringen Volumenströmen, ein relativ hoher Druck in dem Zwischenbehälter 6 erreicht werden kann, ist es zweckmäßig, dort wenigstens eine Entlüftungsvorrichtung 12 zum schnelleren Druckabbau vorzusehen, damit der angestrebte Grenzdruckwert, insbesondere die vollständige Druckausgleichung möglichst rasch erreicht wird. Als Entlüftungsvorrichtung 12 wird z.B. ein Filter verwendet, um das Austreten von Pulvermaterial zu vermeiden. Eine ähnliche Druck-Entspannungsvorrichtung 17 ist auch am Vorbehälter 1 vorgesehen, um auch dort einen Druckabbau zur Angleichung an den Zwischenbehälterdruck zu erreichen. In Umkehrung kann über die Druckluft-Pumpe 16 auch eine Druckbeaufschlagung der Behälter 1 bzw. 6 erfolgen, um dem Druckausgleich bzw. die DruckAngleichung jeweils vor Öffnen der unteren Klappe 4 herbeizuführen.

Bei dieser Ausführung mit pneumatischer Fördervorrichtung 11 können durch die Kompensation der Druckverhältnisse in dem Vorbehälter 1 und dem Zwischenbehälter 6 mit Klappenschleuse 4, 5 über die Austragvorrichtung 11 keine Leckluft und Fehlströmungen mit Verfälschungen des Wägeergebnisses mehr auftreten. Aufgrund der Druckmessung mit den Drucksensoren 9 und 29 bzw. 19 läßt sich somit die Schüttgutförderung der Dosierrotorwaage 20 optimieren. Wenn beispielsweise im Vorbehälter 1 ein Überdruck herrscht, kann der Zwischenbehälter 6 über die Druckluft-Pumpe beaufschlagt werden, so daß sich eine Druckangleichung gegenüber dem Vorbehälter 1 ergibt. Durch diese Angleichung der Druckverhältnisse im Zwischenbehälter 6 und im Vorbehälter 1 läßt sich die Dosiergenauigkeit durch Vermeidung von Fehlströmungen und Partikel-Rückströmungen in der Dosiervorrichtung 20 erhöhen.

Bei einem Unterdruck im Vorbehälter 1 gilt sinngemäß hierbei das umgekehrte Verhältnis. Ein Unterdruck im Vorbehälter 1 kann beispielsweise dann auftreten, wenn die Austragvorrichtung 11 als Absaugvorrichtung ausgebildet ist. Auch hier läßt sich ein Druckausgleich durch die Entlüftung bzw. Druckbeaufschlagung des Vorbehälters 1 bzw. des Zwischenbehälters 6 erzielen, bevor die Öffnung der unteren Klappe 4 zur Schüttgutweitergabe erfolgt.

## Patentansprüche

1. Verfahren zum gravimetrischen Dosieren von Schüttgut, das aus einem Vorratsbehälter (7) einem Vorbehälter (1) zugeführt, dort unter Bestimmung eines Wägesignals zur Weiterleitung an eine Wägeelektronik (3) gewogen und dann aus dem Vorbehälter (1) zu einer gravimetrischen Dosiervorrichtung (20) abgeleitet wird, wobei das Schüttgut vor der Wägung Im Vorbehälter (1) in einem Zwischenbehälter (6) zwischengespeichert wird und erst bei Erreichen eines Abgleichdruckwertes zwischen dem Vorbehälter (1) und dem Zwischenbehälter (6) weitergegeben wird, **dadurch gekennzeichnet, dass** der Druck im Zwischenbehälter (6) und im Vorbehälter (1) mit je einem Drucksensor (9, 29) kontinuierlich gemessen wird, und der im Zwischenbehälter (6) und/oder Vorbehälter (1) gemessene Druck, insbesondere deren Differenzdruckwert, zur Steuerung einer Dosiervorrichtung (20) zu einer Dosiersteuerung bzw. Wägeelektronik (3) geführt wird, sowie bei einer bestimmten Druckanstiegsrate der Zwischenbehälter (6) und/oder der Vorbehälter (1) entlüftet wird.

2. Verfahren nach Anspruch 1, **dadurch gekennzeichnet, dass**
der Abgleichdruckwert auf eine Druckdifferenz von annähernd Null festgelegt wird.

3. Verfahren nach Anspruch 1, **dadurch gekennzeichnet, dass**
der Zwischenbehälter (6) und/oder Vorbehälter (1) von einer Pumpe (16) mit Druck beaufschlagbar ist.

4. Vorrichtung zum gravimetrischen Dosieren von Schüttgut gemäß einem der Ansprüche 1 bis 3, mit einem Vorbehälter (1), der auf wenigstens eine an eine Wägeelektronik (3) angeschlossene Wägezelle (2) abgestützt ist und über flexible Verbindungen mit einer Schüttgutzuleitung und einer gravimetrischen Dosiervorrichtung (20) verbunden ist, wobei vor dem Vorbehälter (1) eine Klappenschleuse (4, 5) mit einem Zwischenbehälter (6) angeordnet ist, und mit einer Förderleitung (11) zum Entleeren der Dosiervorrichtung (20),
**dadurch gekennzeichnet, dass**
ein Drucksensor (19) vorhanden ist, der dazu eingerichtet ist, bei einer pneumatischen Beschickung/Ausbringung des Schüttgutes mit Unter- oder Überdruck zusätzlich den Druck in der Förderleitung (11) zu messen und dass die Wägeelektronik (3) dazu eingerichtet ist, zur Festlegung des Abgleichdruckwertes den gemessenen Druck mit dem Druck In dem Zwischenbehälter (6) zu vergleichen.

5. Vorrichtung nach Anspruch 4, **dadurch gekennzeichnet, dass**
am Zwischenbehälter (6) wenigstens eine Füllstandssonde (8) vorgesehen ist.

## Claims

1. A method for gravimetric dosing of bulk material, which is supplied from a storage container (7) to a reservoir (1), is weighed there by determining a weighing signal for forwarding to an electronic weighing system (3) and is then discharged from the reservoir (1) to a gravimetric dosing apparatus (20), the bulk material being intermediately stored in an intermediate container (6) prior to the weighing in the reservoir (1) and being only released upon reaching a compensation pressure value between the reservoir (1) and the intermediate container (6),
**characterized in that**
a pressure sensor (9, 29) is continually detecting the pressure each in the intermediate container (6) and in the reservoir (1) and the pressure measured in the intermediate container (6) and/or the reservoir (1), and in particular their differential pressure value, is guided to a dosing control unit or electronic weighing system (3) for the purpose of controlling a dosing apparatus (20) and the intermediate container (6) and/or the reservoir (1) is vented from a certain pressure increase rate.

2. A method as claimed in claim 1, **characterized in that** the compensation pressure value is fixed to a pressure difference of approximately zero.

3. A method as claimed in claim 1, **characterized in that** the intermediate container (6) and/or reservoir (1) can be pressurized by a pump (16),

4. An apparatus for gravimetric dosing of bulk material according to any of claims 1 to 3, with a reservoir (1) which rests on at least one weighing cell (2) connected to an electronic weighing system (3) and is connected via flexible connections with a bulk material supply line and a gravimetric dosing apparatus (20), wherein a valve lock (4, 5) with an intermediate container (6) is arranged upstream of the reservoir (1); and with a conveying conduit (11) for the purpose of discharging the dosing apparatus (20),
**characterized in that**
there is provided a pressure sensor (19) which is arranged to additionally measure the pressure in the conveying conduit (11) in the case of a pneumatic charging/discharging of the bulk material with negative or excess pressure, and that the electronic weighing system (3) is arranged to compare the measured pressure with the pressure in the intermediate container (6) for determining the compensation pressure value.

5. An apparatus as claimed in claim 4, **characterized in that** at least one filling level probe (8) is provided on the intermediate container (6).

## Revendications

1. Procédé pour le dosage gravimétrique de matière de vrac qui alimente depuis un silo de stockage (7) un premier contenant (1) dans lequel elle est pesée en fournissant un signal de pesage destiné à être transmis un dispositif électronique de pesage (3), avant d'être transférée du premier contenant (1) à un dispositif de dosage gravimétrique (20), la matière en vrac étant, avant le pesage dans le premier contenant (1), temporairement stockée dans un contenant intermédiaire (6) et ne poursuivant son trajet que lorsque la pression entre le premier contenant (1) et le contenant intermédiaire (6) a été équilibrée, **caractérisé en ce que** la pression est mesurée en continu dans le contenant intermédiaire (6) et dans le premier contenant (1) par chaque fois un capteur de pression (9, 29), la pression mesurée dans le contenant intermédiaire (6) et/ou le premier contenant (1), notamment la différence de pression entre les deux, est transmise à une commande de dosage ou à un dispositif électronique de pesage (3), pour commander un dispositif de dosage (20) et, lorsqu'un certain taux d'augmentation de la pression est atteint, le contenant intermédiaire (6) et/ou le premier contenant (1) est ventilé.

2. Procédé selon la revendication 1, **caractérisé en ce que** la valeur de pression d'équilibrage est déterminée sur la base d'une différence de pression voisine de zéro.

3. Procédé selon la revendication 1, **caractérisé en ce que** le contenant intermédiaire (6) et/ou le premier contenant (1) peut être mis sous pression par une pompe (16).

4. Dispositif pour le dosage gravimétrique de matière de vrac selon l'une des revendications 1 à 3, comprenant un premier contenant (1) qui prend appui sur au moins une cellule de pesage (2) raccordée à un dispositif électronique de pesage (3), et qui est relié par des tuyaux souples à une conduite d'alimentation en matière en vrac et à un dispositif de dosage gravimétrique (20), sachant qu'en amont du premier contenant (1), est disposé un sas à clapets (4, 5) doté d'un contenant intermédiaire (6), et comprenant également une conduite de transport (11) pour vidanger le dispositif de dosage (20), **caractérisé en ce qu'**un capteur de pression (19) est prévu, qui est conçu pour mesurer la pression dans la conduite de transport (11) en cas d'alimentation/extraction pneumatique de la matière en vrac avec dépression ou surpression et **en ce que** le dispositif électronique de pesage (3) est conçu pour comparer la pression mesurée avec la pression régnant dans le contenant intermédiaire (6), afin de déterminer la valeur de pression d'équilibrage.

5. Dispositif selon la revendication 4, **caractérisé en ce qu'**au moins une sonde de niveau (8) est prévue sur le contenant intermédiaire (6).
